# EUROPÄISCHE PATENTSCHRIFT

(11) **EP 2 746 022 B1**
(45) Veröffentlichungstag und Bekanntmachung des Hinweises auf die Patenterteilung: **02.12.2015**
(21) Anmeldenummer: 13005663.3
(22) Anmeldetag: 05.12.2013
(51) Int. Cl.: B29C 33/36, B29C 33/72, B29C 67/24, B08B 1/00, B08B 5/04, B29K 75/00

(54) **Verfahren und Vorrichtung zum Herstellen von Formteilen**
Device and method for manufacturing moulded parts
Procédé et dispositif de fabrication de pièces moulées

(30) Priorität: 18.12.2012 DE 102012024673
(43) Veröffentlichungstag der Anmeldung: 25.06.2014
(73) Patentinhaber: Hennecke GmbH, 53757 Sankt Augustin (DE)
(72) Erfinder: Göbel, Frank, 51061 Köln (DE); Willing, Bernhard, 53225 Bonn (DE)
(74) Vertreter: Gosdin, Michael

(56) Entgegenhaltungen:
- EP-A1- 1 033 230
- EP-A2- 0 361 179
- EP-A2- 0 919 325
- CN-Y- 201 205 737
- JP-A- H0 228 052
- JP-A- S5 571 521
- JP-A- S61 226 356
- JP-A- 2006 167 915

## Beschreibung

Die Erfindung betrifft ein Verfahren zur Herstellung von Formteilen aus Mehrkomponenten-Reaktivkunststoff, insbesondere aus Polyurethan, bei dem eine Anzahl Werkzeugformen mittels Formträgerwagen zumindest zeitweise entlang einer geschlossenen, vorzugsweise ovalen, Fertigungsstrecke bewegt wird. Des weiteren betrifft die Erfindung eine Vorrichtung zum Herstellen von Formteilen.

Die DE 44 44 280 C2 offenbart ein Verfahren und eine Vorrichtung der gattungsgemäßen Art. Die Vorrichtung umfasst eine Fertigungsstrecke, die als langgestrecktes Oval ausgebildet ist. Hierbei ist eine Vielzahl von Arbeitsstationen entlang des Umfangs der ovalförmigen Struktur angeordnet, wobei es sich auch um Formträgerwagen handeln kann. In dem Dokument wird ein Konzept vorgeschlagen, das die Versorgung der Arbeitsstationen mit Signalen bzw. Energie erlaubt, namentlich die Versorgung der Formträgerwagen mit elektrischen Signalen und mit verschiedenen Energien (z. B. elektrische Energie, Wasser zur Temperierung, Hydrauliköl, Vakuum oder Druckluft).

Ein gattungsgemäßes Verfahren und eine entsprechende Vorrichtung offenbart auch die JP S61 226356 A**.** Die JP H02 28052 A offenbart ein schwenkbares Reinigungselement, das an einem Wagen angebracht ist und zwecks Reinigung des Untergrunds in Richtung Boden herunter geschwenkt werden kann.

Aus der DE 20 2010 005 011 U1 ist eine Ovalanlage bekannt, bei der eine Anzahl von Formträgern mit ein, zwei oder mehr Schäumformen angeordnet ist. Ferner ist eine Handhabungsvorrichtung vorgesehen, an deren Arm eine Schaumaustragvorrichtung zum Schaumeintrag in die Schäumformen vorgesehen ist. Die DD 227 381 A1 und die US 3 794 151 A offenbaren eine ähnliche Ovalanlage mit einer Anzahl Arbeitsstationen.

Bekannt sind auch Anlagen, bei denen eine Werkzeugform mit einem Formträger als eigenständiger Wagen auf einem an eine umlaufende Kette angekoppelten Wagen platziert ist. Wenn ein solcher Wagen ausgeschleust werden soll, muss zunächst der den auszuschleusenden Formträger übernehmende Wagen mit der Anlage synchronisiert werden. Dann wird dieser Formträgerwagen auf den anderen Wagen geschoben oder gezogen, wobei dann die Versorgungsleitungen mittels Schnellkupplungen getrennt werden.

Nachteilig an dieser Verfahrensweise ist, dass ein zweiter Wagen zunächst synchronisiert werden muss. Außerdem ist ein wesentlich längerer Hub notwendig, so dass das Verschieben relativ viel Zeit in Anspruch nimmt. Ein Ausschleusen mehrerer Wagen hintereinander ist dadurch wesentlich schwieriger zu realisieren und in der Regel nicht möglich.

Die WO 99/010155 A2 beschreibt einen Formträger, der einschließlich der Versorgungsaggregate an einem oberhalb der Formenträger verlaufenden Schienensystem aufgehängt wird. Die hängende Anordnung bewirkt zwar eine sehr gute Zugänglichkeit zur Form von beiden Seiten, ist aber andererseits konstruktiv sehr aufwendig, da der Formträger einschließlich der Aggregate bei dem sich hieraus ergebenden hohen Gewicht in der hängenden Anordnung zumindest in dem Bereich, in dem das Reaktionsgemisch häufig automatisiert per Roboter eingetragen wird, mit geringer Lagetoleranz geführt bzw. positioniert werden muss.

Bei Anlagen der genannten Art müssen die umlaufenden Formträger zumindest mit elektrischen Signalen sowie mit Energie (insbesondere mit Druckenergie, bevorzugt mit Druckluft, gegebenenfalls mit Hydraulikmedium oder mit elektrischer Energie) versorgt werden, um Funktionalitäten, wie z. B. das Öffnen und Schließen des Formwerkzeugs, das Zuhalten des Formwerkzeugs oder den Betrieb von automatisierten Entlüftungsventilen, erfüllen zu können. Des Weiteren ist in der Regel auch eine Temperierung des Werkzeugs erforderlich, so dass die Formen auch mit einem Temperiermedium (oder zum Erwärmen gegebenenfalls auch mit elektrischer Heizenergie) versorgt werden müssen.

Außerdem ist es in solchen Anlagen notwendig, einzelne Formen oder Formträger zwecks Wartung oder zwecks Variation der Formgeometrie ein- und ausschleusen zu können. Natürlich ist es unter wirtschaftlichen Gesichtspunkten sehr vorteilhaft, wenn dies keinerlei oder zumindest einen möglichst geringen Einfluss auf die durchschnittliche Taktzeit der Bauteile und damit auf die Produktivität der Anlage hat.

Ein dritter wichtiger Aspekt ist die Reinigung der Fertigungsstrecke. Auch hierbei ist es aus wirtschaftlichen Gründen sehr vorteilhaft, wenn die Anlagenauslastung hiervon möglichst wenig beeinträchtigt wird. Das Anlagenkonzept und die Gestaltung der Anlage haben nämlich einen nicht unerheblichen Einfluss hierauf. Eine gut gewartete, saubere Anlage wirkt sich auf Dauer sehr positiv auf die Zuverlässigkeit und Ausbeute des gesamten Prozesses aus.

Mit Blick auf die genannten Kriterien sind die vorbekannten Lösungen noch nicht optimal, wobei insbesondere die Reinigung der Anlage nicht unproblematisch ist und oft eine Unterbrechung des Fertigungsbetriebs erfordert; demgemäß sind entsprechend nachteilige wirtschaftliche Einbußen gegeben.

Der Erfindung liegt daher die **Aufgabe** zugrunde, ein Verfahren und eine Vorrichtung der eingangs genannten Art so fortzubilden, so dass eine verbesserte Reinigungsmöglichkeit besteht, die sich auf die Wirtschaftlichkeit des Betriebs nicht oder nur minimal auswirkt. Damit soll die Anlage in einfacherer Weise sauber gehalten werden können, um dauerhaft einen qualitativ einwandfreien und wirtschaftlichen Betrieb sicherzustellen.

Die **Lösung** dieser Aufgabe zeichnet sich verfahrensgemäß dadurch aus, dass entlang der geschlossenen Fertigungsstrecke an einem Förderelement eine Anzahl Versorgungswagen angeordnet ist, die durch das Förderelement bewegt werden, dass zeitweise anstelle mindestens eines Formträgerwagens ein Reinigungswagen in der Fertigungsstrecke angeordnet wird, und dass der Reinigungswagen an einem Versorgungswagen lösbar angekoppelt und von diesem bewegt wird, wobei der Reinigungswagen mit Rollen versehen ist und mit diesen auf einem ortsfesten Untergrund bewegt wird und wobei mit dem Reinigungswagen der ortsfeste Untergrund gereinigt wird.

Der Reinigungswagen wird dabei zur Einbringung in die Fertigungsstrecke an einen nicht besetzten Versorgungswagen herangefahren und mit diesem Lösbar gekoppelt, wobei der Reinigungswagen hierbei mit seinen Rollen auf dem ortsfesten Untergrund bewegt wird, wobei der Reinigungswagen zwecks Bewegung entlang der Fertigungsstrecke im gekoppelten Zustand mit dem Versorgungswagen von diesem geführt und bewegt wird, wobei der Reinigungswagen hierbei mit seinen Rollen auf dem ortsfesten Untergrund bewegt wird, und wobei der Reinigungswagen zur Herausnahme aus der Fertigungsstrecke von dem Versorgungswagen abgekoppelt und von der Fertigungsstrecke weg geführt wird, wobei der Reinigungswagen hierbei mit seinen Rollen auf dem ortsfesten Untergrund bewegt wird.

Der Reinigungswagen wird dabei vorzugsweise im an den Versorgungswagen angekoppelten Zustand von diesem mit Signalen und/oder Energie versorgt.

Der Reinigungswagen kann dabei den ortsfesten Untergrund mittels eines Aggregats zum Schmutzaufsaugen reinigen. Alternativ oder additiv kann vorgesehen sein, dass zur Reinigung mindestens eine Bürste vorgesehen wird, mit dem der Boden gefegt wird. Weiterhin kann der Reinigungswagen alternativ oder additiv mittels mindestens eines Magneten eine Säuberung von metallischem Abfall vornehmen.

Jeder Formträgerwagen ist bevorzugt an einen Versorgungswagen ankoppelbar ausgebildet und mit Rollen versehen, so dass der Formträgerwagen von dem Versorgungswagen angetrieben auf dem ortsfesten Untergrund rollt, wobei der Formträgerwagen zur Einbringung in die Fertigungsstrecke an einen nicht besetzten Versorgungswagen herangefahren und mit diesem gekoppelt wird, wobei der Formträgerwagen hierbei mit seinen Rollen auf dem ortsfesten Untergrund bewegt wird, wobei der Formträgerwagen zwecks Bewegung entlang der Fertigungsstrecke im gekoppelten Zustand mit dem Versorgungswagen von diesem geführt und bewegt wird, wobei der Formträgerwagen hierbei mit seinen Rollen auf dem ortsfesten Untergrund bewegt wird, und wobei der Formträgerwagen zur Herausnahme aus der Fertigungsstrecke von dem Versorgungswagen abgekoppelt und von der Fertigungsstrecke weg geführt wird, wobei der Formträgerwagen hierbei mit seinen Rollen auf dem ortsfesten Untergrund bewegt wird. Die Formträgersysteme werden demgemäß also in einen Formträgerwagen und einen Versorgungswagen funktional aufgeteilt.

Bei Ausbildung der Fertigungsstrecke als geschlossene, vorzugsweise ovale, Bahn mit geraden und gebogenen Abschnitten werden der Reinigungswagen und/oder die Formträgerwagen vorzugsweise beim Eintritt von einem geraden in einen gebogenen Abschnitt aus der Fertigungsstrecke ausgeschleust. Entsprechend kann vorgesehen sein, dass bei derartiger Ausbildung der Fertigungsstrecke der Reinigungswagen und/oder die Formträgerwagen beim Eintritt von einem gebogenen in einen geraden Abschnitt in die Fertigungsstrecke eingeschleust werden, wobei vorzugsweise der Reinigungswagen und/oder ein Formträgerwagen beim Einschleusen in die Fertigungsstrecke zunächst an einen freien Platz zwischen zwei Versorgungswagen an bzw. in die Fertigungsstrecke bewegt wird, wobei dann der in Förderrichtung nachfolgende Versorgungswagen den Reinigungswagen und/oder den Formträgerwagen auf den zur Aufnahme des Reinigungswagens und/oder des Formträgerwagens vorgesehenen Versorgungswagen schiebt, wodurch der Reinigungswagen und/oder der Formträgerwagen synchronisiert in seine Ankoppelposition mit dem ihn aufnehmenden Versorgungswagen gebracht wird.

Das Ankoppeln und das Abkoppeln eines Reinigungswagens und/oder eines Formträgerwagens an einen und von einem Versorgungswagen erfolgt bevorzugt durch eine Verschiebebewegung des Reinigungswagens und/oder des Formträgerwagens, die horizontal und senkrecht zur Bewegungsrichtung des Versorgungswagens ist.

Der von einem Versorgungswagen abgekoppelte Reinigungswagen und/oder ein von einem Versorgungswagen abgekoppelter Formträgerwagen wird bevorzugt durch einen dem Versorgungswagen nachfolgenden Versorgungswagen aus der Fertigungsstrecke herausgeschoben.

Die Vorrichtung zur Herstellung von Formteilen aus Mehrkomponenten-Reaktivkunststoff umfasst eine Anzahl Werkzeugformen auf Formträgerwagen und eine geschlossene, vorzugsweise ovale, Fertigungsstrecke, entlang der die Formträgerwagen bewegt werden können, wobei sich die Vorrichtung erfindungsgemäß auszeichnet durch mindestens einen Reinigungswagen, der mit Rollen versehen ist und mit diesen auf einem ortsfesten Untergrund bewegt werden kann, wobei der Reinigungswagen ausgebildet ist, den ortsfesten Untergrund zu reinigen, wobei entlang der geschlossenen Fertigungsstrecke an einem Förderelement eine Anzahl Versorgungswagen angeordnet ist, die durch das Förderelement bewegt werden können, und wobei der mindestens eine Reinigungswagen zur lösbaren Ankopplung an einen Versorgungswagen ausgebildet ist.

Bevorzugt sind dabei Verschiebemittel vorhanden, mit denen der Reinigungswagen in eine Richtung horizontal und senkrecht zur Bewegungsrichtung des Versorgungswagens bewegt werden kann, um ihn an den Versorgungswagen anzukoppeln oder ihn von diesem zu entkoppeln. Dabei sind der Reinigungswagen und der Versorgungswagen vorzugsweise mit Kopplungsmitteln versehen, mit denen der Reinigungswagen vom Versorgungswagen mit Signalen und/oder Energie versorgt werden kann.

Der Reinigungswagen kann ferner mindestens ein Führungselement aufweisen, das zum Eingriff in eine am ortsfesten Untergrund angeordnete Führungsschiene ausgebildet ist, um den Reinigungswagen in Richtung der Führungsschiene zu führen.

Es handelt sich also bei der vorgeschlagenen Lösung um ein Verfahren zur Herstellung von Formteilen aus Mehrkomponenten-Reaktivkunststoff, insbesondere aus Polyurethan, bei dem die Formen in Formträgerwagen durch eine geschlossene (z. B. ovale) Fertigungsstrecke bewegt werden. Ein sich in der Fertigungsstrecke befindliche Formträgerwagen wird vorzugsweise zeitweise, also temporär, durch einen Reinigungswagen ersetzt, der den Boden reinigt, auf dem sich auch die Formträgerwagen auf eigenen (Lenk)Rollen über einen ortsfesten Untergrund durch die Fertigungsstrecke bewegen. Demgemäß wird erfindungsgemäß ein Formträgerwagen aus der Fertigungsstrecke ausgeschleust und statt dessen ein Reinigungswagen eingeschleust, der sich ebenfalls auf eigenen Lenkrollen über den ortsfesten Untergrund bewegt. Nach Ausschleusen eine Formträgerwagens aus der Fertigungsstrecke wird also der sich auf eigenen Lenkrollen befindliche Reinigungswagen in die Fertigungsstrecke eingeschleust, um die Reinigung der Anlage vorzunehmen.

Der Reinigungswagen ist bevorzugt mit einem Aggregat zum Schmutzaufsaugen, mit Bürsten zum Wegfegen von Verunreinigungen und/oder mit mehreren Magneten zum Aufsammeln von Metallteilen versehen.

Die Reinigung der Anlage wird durch das erfindungsgemäße Verfahren und die erfindungsgemäße Vorrichtung in besonders wirtschaftlicher Weise möglich.

Bei den Versorgungswagen handelt es sich zumeist um Wagen, die dauerhaft an einer umlaufenden Kette (Förderelement) angekoppelt sind und auf denen die Aggregate zur Bereitstellung von elektrischer Energie, Temperierwasser, Druckenergie und/oder Vakuum installiert sind.

Bei den Formträgerwagen handelt es sich um Wagen, auf denen die Formträger und die Formen angeordnet sind. Diese Wagen besitzen eigene (Lenk)Rollen, die sich auf dem stationären Untergrund bewegen. Dies ist in der Regel der Hallenboden oder auf eine auf dem Hallenboden angebrachte Fahrbahn.

Die funktionale Trennung des Formträgerwagens, welcher zur Wartung und zum Formwechsel ein- und ausgeschleust werden muss, vom Versorgungswagen, auf dem die Aggregate zur Versorgung mit Druckenergie (z. B. Druckluft) sowie zur Temperierung angebracht sind, bewirkt, dass nicht mehr Aggregate (z.B. Temperiergeräte und Druckluftspeicher) installiert werden müssen, als es Formträgerwagenplätze in der Fertigungsstrecke gibt. Dies hat entsprechende wirtschaftliche Vorteile.

Dadurch wird es außerdem ermöglicht, dass beispielsweise ein Temperiergerät oder ein Druckspeicher mehrere Formen bedienen kann, da diese Aggregate nicht mit ausgeschleust werden und somit unabhängig davon, welche Formträgerwagen konkret gerade aus- oder eingeschleust werden, stets in der Fertigungsstrecke verbleiben und zur Verfügung stehen.

Außerdem ermöglicht die Gestaltung der Formträgerwagen mit eigenen Lenkrollen, auf denen sich der Formträgerwagen auch innerhalb der Fertigungsstrecke über den Hallenboden bewegt, eine große Einfachheit und Flexibilität beim Ein- und Ausschleusen und beim anschließenden Handling der Formträgerwagen. Es wird vorteilhaft kein zusätzliches Transportvehikel benötigt, auf dem der Formträger nach dem Abkoppeln weiterbewegt wird und dessen Bewegung auch noch mit der Förderanlage synchronisiert werden müsste.

Demgemäß ist ein einfaches und sehr vorteilhaftes Ein- und Ausschleusen des Reinigungswagens und der Formträgerwagen in die Fertigungsstrecke sichergestellt.

Wie oben bereits erwähnt, werden der Reinigungswagen und die Formträgerwagen bevorzugt beim Eintritt in den Kurvenbereich der Fertigungsstrecke (im Falle einer ovalen Ausbildung) ausgeschleust, indem sie zunächst durch leichtes bzw. geringfügiges translatorisches horizontales Verschieben quer zur Förderrichtung von dem Versorgungswagen abgekoppelt werden. Anschließend wird der abgekoppelte Wagen dann ohne eigenen Antrieb von dem weiterhin angekoppelten folgendem Versorgungswagen (gegebenenfalls entlang einer Führung) aus der Fertigungsstrecke geschoben. Der weitere Transport geschieht dann im einfachsten Fall durch manuelles Schieben, er kann aber natürlich auch automatisiert erfolgen, beispielsweise durch Reibräder.

Das Ausschleusen des Reinigungs- und des Formträgerwagens in der Kurve (d. h. in einem gekrümmten Abschnitt der Fertigungsstrecke) bietet dabei einige wesentliche Vorteile gegenüber einem Ausschleusen im geraden Bereich. Der Wagen muss nur zum Abkoppeln vom Versorgungswagen leicht parallel versetzt (translatorisch quer zur Förderrichtung verschoben) werden und kann dann gerade weiterlaufen, um aus der Fertigungsstrecke herausgeschleust zu werden. Bei einem Ausschleusen im Bereich der Gerade ist ein wesentlich größerer Parallelversatz (mindestens um eine volle Wagenbreite) notwendig.

Zum weiteren Transport des Reinigungs- bzw. Formträgerwagens nach dem Ausschleusen wird kein zusätzlicher fahrbarer Wagen benötigt; der Reinigungs- bzw. Formträgerwagen kann im einfachsten Fall von Hand zu seiner Wartungsstation bzw. Aufbewahrungsstation bewegt werden. Häufig ist ein hoher Automatisierungsgrad im Wartungsbereich wirtschaftlich nicht sinnvoll, so dass die Einfachheit und die hohe Flexibilität dieser Verfahrensweise sehr vorteilhaft sind. Natürlich kann der Reinigungs- bzw. Formträgerwagen aber auch in automatisierter Form weitertransportiert werden. Eine einfache Möglichkeit sind z. B. angetriebene stationäre Reibräder, die den Reinigungs- bzw. Formträgerwagen antreiben.

Die weiteren beschriebenen Fortbildungen erlauben die Nutzung weiterer Vorteile der Erfindung. Hiernach werden der Reinigungswagen bzw. die Formträgerwagen im Übergang des Kurvenbereichs in den geraden Bereich der ovalförmigen (oder ggf. beispielsweise auch in Form eines gerundeten Rechtecks verlaufenden) Fertigungsstrecke eingeschleust, indem sie zunächst wieder an einen freien Platz zwischen zwei Versorgungswagen bewegt werden, wobei sie dann von dem folgenden Versorgungswagen weitertransportiert und positioniert werden, bevor sie dann durch translatorisches Verschieben quer zur Förderrichtung (Parallelverschieben) wieder an den Versorgungswagen angekoppelt werden.

Demgemäß ist ein einfaches Reinigen der Fahrbahn der Anlage sichergestellt. Bei der Produktion von Formteilen, meist PKW-Sitzpolster aus Polyurethan-Weichschaum, fällt planmäßiger Abfall an jeder Form an. Dabei handelt es sich um Schaumreste, die an den Entlüftungsstellen der Formen anfallen. Ebenso können Einlegeteile wie Drähte oder Gewebefetzen auf die Fahrbahn gelangen. Werden solche Verschmutzungen nicht regelmäßig entfernt, ist die Funktion der Anlage stark gefährdet. Mit dem vorgeschlagenen Verfahren ist ein einfaches Einschleusen eines Reinigungswagens in die Fertigungsstrecke sowie eine sehr einfache Reinigung des Untergrundes, auf dem sich die Formträgerwagen bewegen, möglich. Da der ganze Wagen sehr einfach getauscht werden kann, kann die Gestaltung des Reinigungswagens hinsichtlich der Reinigungsfunktionen optimiert werden. Damit das Ein- und Ausschleusen analog zum Ein- und Ausschleusen der Formträgerwagen gut funktioniert, müssen lediglich die Abmaße des Reinigungswagens bezüglich der Anschläge der Versorgungswagen mit denen der Formträgerwagen übereinstimmen. Der Reinigungswagen kann dann zumindest auch elektrisch an einen Versorgungswagen angeschlossen werden und wird von diesem mit elektrischer Energie versorgt.

Der Reinigungs- bzw. Formträgerwagen muss zwischen der Ein- und Ausschleusestelle auch nicht durchgängig entlang vorgegebenen Bahnen geführt werden. In vielen Fällen ist ein manuelles und nicht an vorgegebene ortsfeste Bahnen gebundenes Schieben des Reinigungs- bzw. Formträgerwagens im Wartungsbereich aufgrund der hohen Flexibilität und wegen der geringen Investitionskosten wirtschaftlich sinnvoller. Dadurch, dass der Reinigungs- bzw. Formträgerwagen mit Lenkrollen ausgestattet ist, ist dieses einfache und unkomplizierte Handling des Reinigungs- bzw. Formträgerwagen im Wartungsbereich problemlos umsetzbar.

Demgemäß stellt die Erfindung ein wirtschaftliches Verfahren bereit, um die (Oval)Förderanlage sauber zu halten. Die Wirtschaftlichkeitsaspekte sind hierbei insbesondere die Investitionskosten, die Taktzeiten bzw. die Anlagenauslastung, speziell unter dem Gesichtspunkt der Wartung bzw. Reinigung der Anlage. Somit kann nahezu ohne Taktzeitverlust in regelmäßigen Abständen ein Reinigungswagen in die Förderstrecke eingeschleust und dadurch eine optimale Anlagenpflege sichergestellt werden. Eine schlecht gereinigte Anlage führt in der Regel auf lange Sicht stets zu erhöhten Stillstandszeiten und folglich zu einer schlechteren Wirtschaftlichkeit der Anlage.

Es wird eine funktionale Trennung einerseits der umlaufenden Transportwagen hinsichtlich der Energie- bzw. Signalversorgung und andererseits der Formträger bzw. der Reinigungseinheit vorgesehen, also eine Aufteilung in einen Versorgungswagen und einen Reinigungs- bzw. Formträgerwagen. Der Reinigungs- bzw. Formträgerwagen ist als autarke Einheit (mit Lenkrollen) ausgebildet, die nach dem Abkoppeln vom Versorgungswagen nicht von einem anderen Transportwagen übernommen werden muss. Dadurch entfällt vorteilhaft eine sonst erforderliche Synchronisation des übernehmenden Transportwagens mit der Anlage. Hierdurch können auch eine große Anzahl Formträgerwagen direkt hintereinander ohne Zeitverlust ausgetauscht bzw. der Reinigungswagen schnell und problemlos ein- und ausgeschleust werden.

In den Zeichnungen ist ein Ausführungsbeispiel der Erfindung dargestellt. Es zeigen:
- Fig. 1: in der Draufsicht eine Fertigungsstrecke mit einem Ovalförderband mit einer Anzahl Versorgungswagen, einem Reinigungswagen und Formträgerwagen, und
- Fig. 2: bis
- Fig. 5: schrittweise das Ein- und Ausschleusen eines Reinigungs- und eines Formträgerwagens in die Fertigungsstrecke.

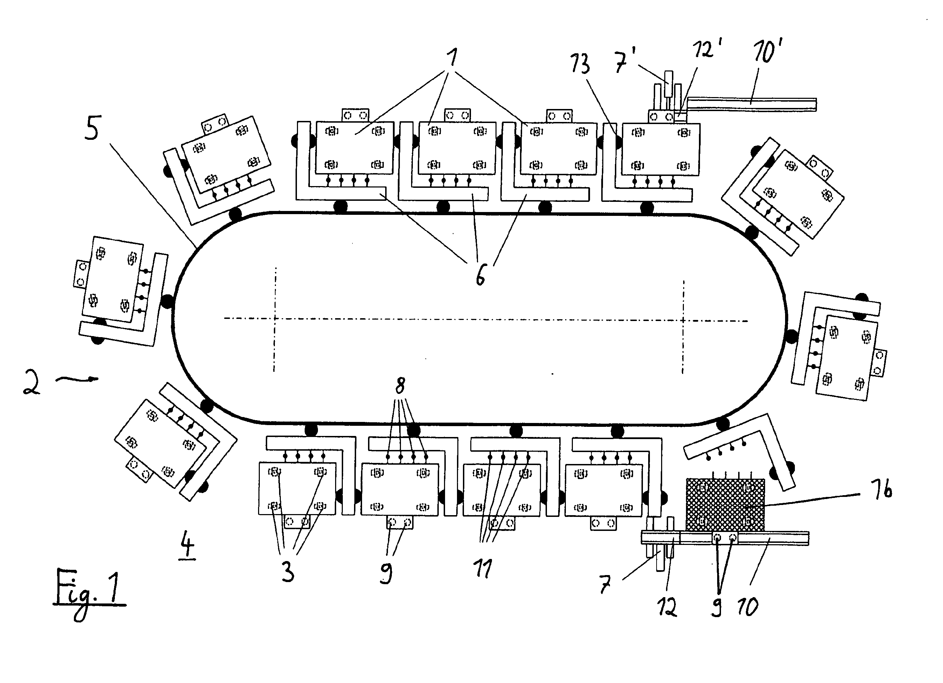

In Figur 1 ist schematisch eine Fertigungsstrecke 2 dargestellt. Sie umfasst ein Förderelement 5 (umlaufende Kette), das vorliegend als Ovalförderband ausgebildet ist. An der umlaufenden Kette 5 sind Versorgungswagen 6 befestigt. Die Versorgungswagen 6 sind ausgebildet, um an ihnen je einen Formträgerwagen 1 lösbar ankoppeln zu können; auf dem Formträgerwagen 1 befindet sich eine Form für die Herstellung eines Formteils. Weiter vorgesehen ist ein Reinigungswagen 1b.

Die Versorgungsleitungen der Versorgungswagen 6 sind über Kopplungsmittel 8 in Form von Schnellkupplungen mit den entsprechenden Leitungen 11 des Formträgerwagens 1 bzw. des Reinigungswagens 1b verbunden.

Die Hälften der Form können je nach Anwendung gehoben und gesenkt bzw. geschwenkt werden. Das Öffnen und Schließen der Form geschieht vorzugsweise über stationäre Kufen (nicht dargestellt), an denen der Formträgerwagen 1 vorbeifährt. Die Kufen bewegen dann einen Anschlag am Werkzeug der mit einem Hebelsystem verbunden ist. Über dieses Hebelsystem kann dann jede Werkzeughälfte um eine schwenkbare Lagerung herum bewegt/geschwenkt werden. Bei dieser Art des Öffnens und Schließens der Formen, d. h. über stationäre Kufen, sollten diese möglichst nicht in Bodennähe, also unterhalb der Formträgerwagen, angebracht sein, sondern seitlich und/oder oberhalb derselben. Dadurch ist gewährleistet, dass der Boden in einfacher Weise vom Reinigungswagen 1b gereinigt werden kann, wie es nachfolgend beschrieben wird.

Die Formträgerwagen 1 sowie der Reinigungswagen 1b laufen jeweils auf vier gelenkigen Rollen 3 über den ortsfesten Untergrund 4. An dem Formträgerwagen 1 und auch am Reinigungswagen 1b sind außen zwei Führungsrollen 9 befestigt. Über diese Führungsrollen 9 kann der Reinigungs- bzw. Formträgerwagen 1, 1b über einen stationären Verfahrschlitten 12, 12' mittels eines ortsfest angeordneten Verschiebemittels 7, 7' (stationärer Zylinder) oder auch mittels einer anderen stationären Vorrichtung beim Ein- bzw. Ausschleusen eines Reinigungs- bzw. Formträgerwagens 1, 1b parallel, d. h. horizontal und quer zur Förderrichtung, verschoben werden. Außerdem sorgen die Führungsrollen 9 dafür, dass der Reinigungs- bzw. Formträgerwagen 1, 1b beim Ausschleusen anschließend vom Versorgungswagen 6 mittels eines Anschlags 13 in einer Führungsschiene 10' weitergeschoben wird. Analog dient eine Führungsschiene 10 dem geführten Zuführen eines Reinigungs- bzw. Formträgerwagens 1, 1b beim Einschleusen. Ebenfalls analog zum Ausschleusen kann der Reinigungs- bzw. Formträgerwagen 1, 1b beim Einschleusen über den Verfahrschlitten 12 mittels des stationären Verschiebemittels 7 über die Führungsrollen 9 parallelverschoben werden.

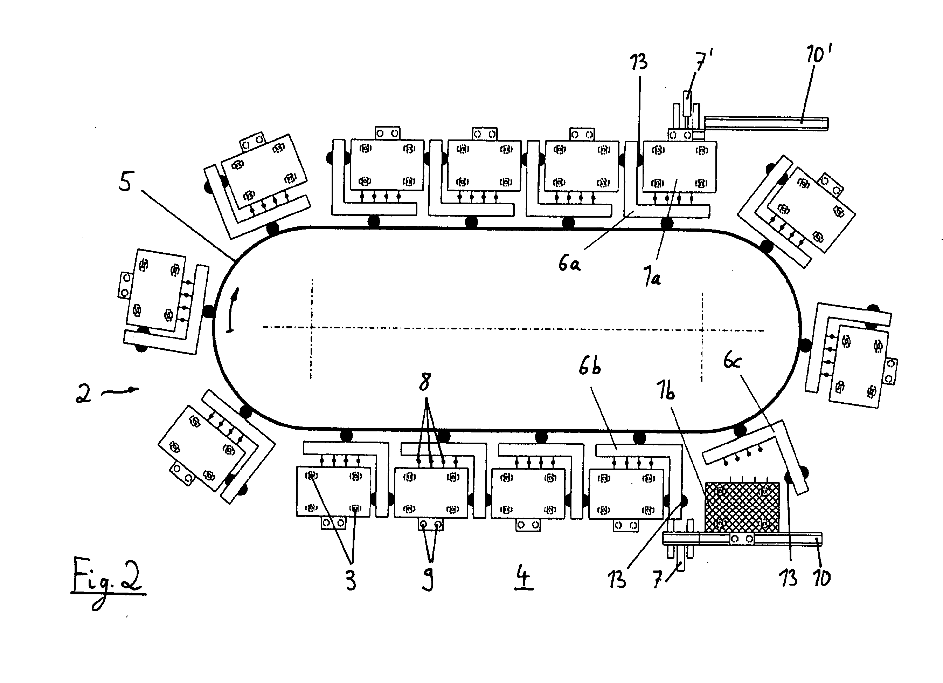

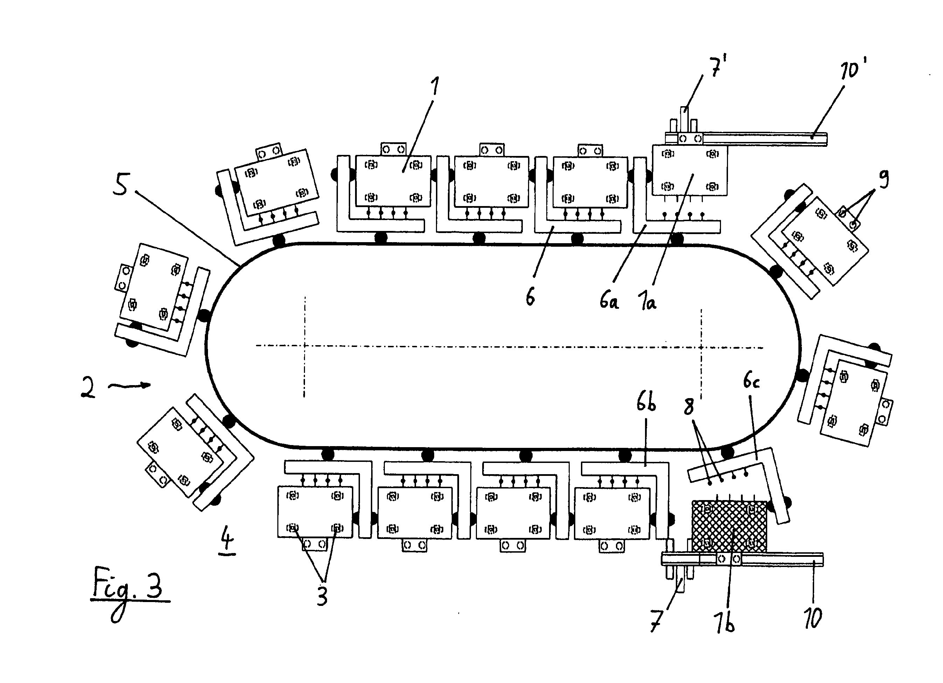

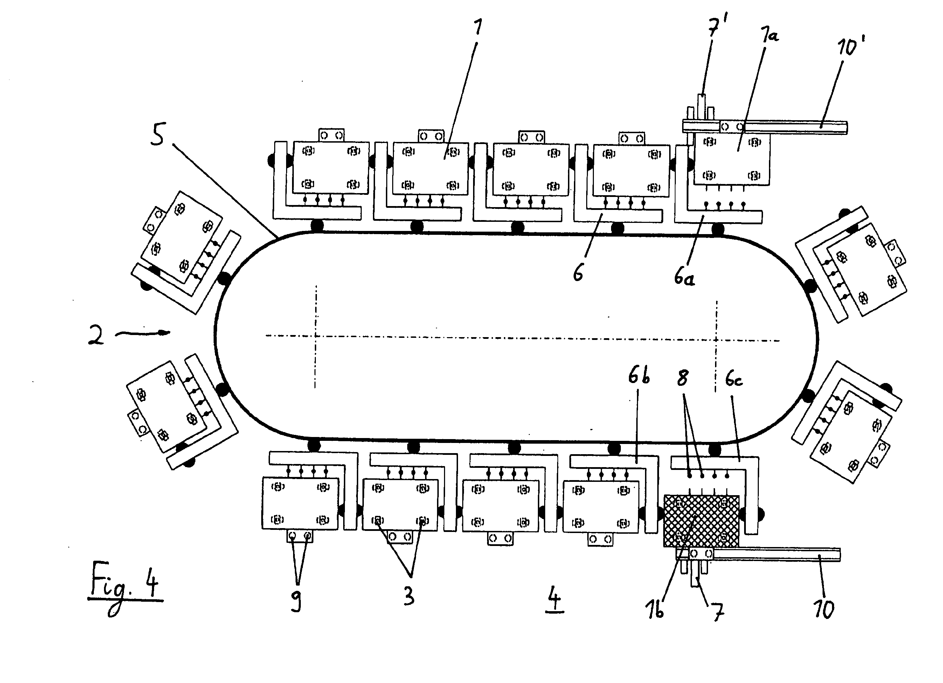

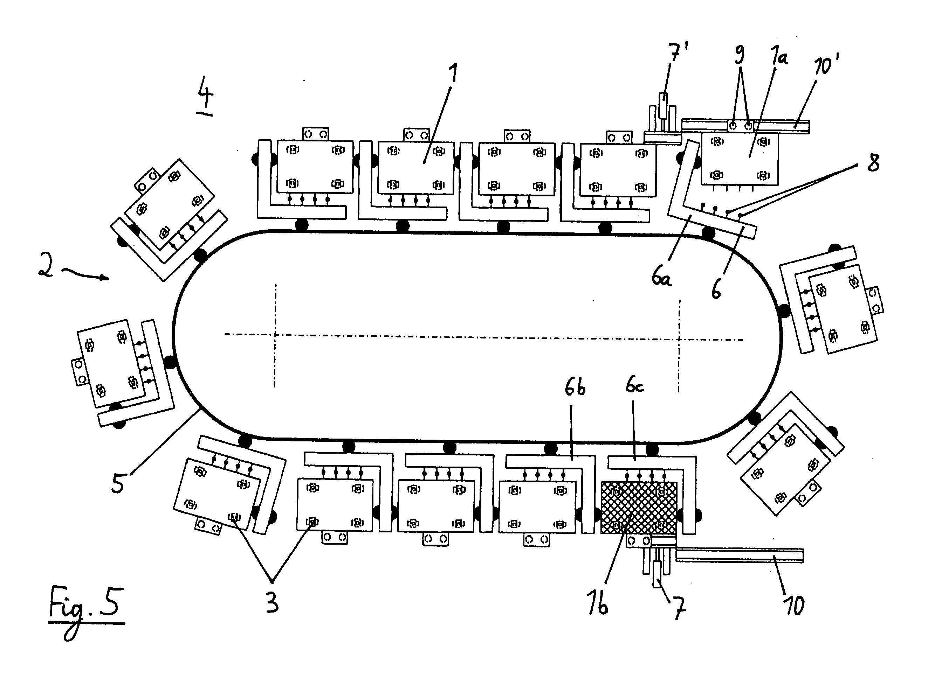

In den Figuren 2 bis 5 ist für das hier skizzierte bevorzugte Ausführungsbeispiel das Ausschleusen eines Formträgerwagens 1 sowie das Einschleusen eines Reinigungswagens 1b aus der bzw. in die Fertigungsstrecke 2 schrittweise dargestellt.

Beim Ausschleusen wird der Formträgerwagen 1a beim Eintritt in den Kurvenbereich des Ovalförderbandes 5 zunächst über den Verfahrschlitten 12' mittels des stationären Verschiebemittels 7' parallelverschoben, d. h. translatorisch in Richtung quer zur Förderrichtung. Der abgekoppelte Formträgerwagen 1a wird vom Versorgungswagen 6a über den Anschlag 13 weitergeschoben. Die am Boden angebrachte Führungsschiene 10' sorgt dafür, dass der Wagen 1a geradeaus geführt wird. Zum weiteren Handling kann der Wagen 1a dann von Hand weitergeschoben oder von einer anderen Förderstrecke übernommen werden.

Beim Einschleusen eines Reinigungswagens 1b in das Ovalförderband wird der einzuschleusende Reinigungswagen 1b zunächst über die Führungsschiene 10 zwischen dem vorlaufenden Versorgungswagen 6b und dem den einzuschleusenden Reinigungswagen 1b übernehmenden Versorgungswagen 6c geschoben. Er wird im Auslauf der Kurve zwischen dem Anschlag 13 des vorlaufenden Versorgungswagens 6b und dem Anschlag 13 des den einzuschleusenden Reinigungswagen 1b übernehmenden Versorgungswagen 6c lagerichtig positioniert. Über den Verfahrschlitten 12 wird der einzuschleusende Reinigungswagen 1b mittels des stationären Verschiebemittels 7 parallelverschoben; dabei werden die Versorgungsleitungen über die Schnellkupplungen 8 miteinander verbunden.

Ist der Reinigungswagen 1b eingeschleust, wird er von seinem Versorgungswagen 6 gezogen, während er den Boden mit entsprechenden Reinigungselementen bzw. -aggregaten reinigt.

Die Ausschleusung des Reinigungswagens 1b erfolgt analog zu der des Formträgerwagens 1 a.

### Bezugszeichenliste:

- 1: Formträgerwagen
- 1a: Formträgerwagen
- 1b: Reinigungswagen
- 2: Fertigungsstrecke
- 3: Rolle (Lenkrolle)
- 4: ortsfester Untergrund
- 5: Förderelement (umlaufende Kette)
- 6: Versorgungswagen
- 6a: Versorgungswagen
- 6b: Versorgungswagen
- 6c: Versorgungswagen
- 7: Verschiebemittel
- 7': Verschiebemittel
- 8: Kopplungsmittel (Schnellkupplung)
- 9: Führungselement (Führungsrolle)
- 10: Führungsschiene
- 10': Führungsschiene
- 11: Leitung
- 12: stationärer Verfahrschlitten
- 12': stationärer Verfahrschlitten
- 13: Anschlag

## Patentansprüche

1. Verfahren zur Herstellung von Formteilen aus Mehrkomponenten-Reaktivkunststoff, insbesondere aus Polyurethan, bei dem eine Anzahl Werkzeugformen mittels Formträgerwagen (1) zumindest zeitweise entlang einer geschlossenen, vorzugsweise ovalen, Fertigungsstrecke (2) bewegt wird,
**dadurch gekennzeichnet,**
**dass** entlang der geschlossenen Fertigungsstrecke (2) an einem Förderelement (5) eine Anzahl Versorgungswagen (6) angeordnet ist, die durch das Förderelement (5) bewegt werden,
**dass** zeitweise anstelle mindestens eines Formträgerwagens (1) ein Reinigungswagen (1b) in der Fertigungsstrecke (2) angeordnet wird, und
**dass** der Reinigungswagens (1b) an einem Versorgungswagen (6) lösbar angekoppelt und von diesem bewegt wird,
wobei der Reinigungswagen (1b) mit Rollen (3) versehen ist und mit diesen auf einem ortsfesten Untergrund (4) bewegt wird und
wobei mit dem Reinigungswagen (1b) der ortsfeste Untergrund (4) gereinigt wird.

2. Verfahren nach Anspruch 1, **dadurch gekennzeichnet, dass** der Reinigungswagen (1b) zur Einbringung in die Fertigungsstrecke (2) an einen nicht besetzten Versorgungswagen (6) herangefahren und mit diesem gekoppelt wird, wobei der Reinigungswagen (1b) hierbei mit seinen Rollen (3) auf dem ortsfesten Untergrund (4) bewegt wird, wobei der Reinigungswagen (1b) zwecks Bewegung entlang der Fertigungsstrecke (2) im gekoppelten Zustand mit dem Versorgungswagen (6) von diesem geführt und bewegt wird, wobei der Reinigungswagen (1b) hierbei mit seinen Rollen (3) auf dem ortsfesten Untergrund (4) bewegt wird, und wobei der Reinigungswagen (1b) zur Herausnahme aus der Fertigungsstrecke (2) von dem Versorgungswagen (6) abgekoppelt und von der Fertigungsstrecke (2) weg geführt wird, wobei der Reinigungswagen (1b) hierbei mit seinen Rollen (3) auf dem ortsfesten Untergrund (4) bewegt wird.

3. Verfahren nach Anspruch 1 oder 2, **dadurch gekennzeichnet, dass** der Reinigungswagen (1b) im an den Versorgungswagen (6) angekoppelten Zustand von diesem mit Signalen und/oder Energie versorgt wird.

4. Verfahren nach einem der Ansprüche 1 bis 3, **dadurch gekennzeichnet, dass** der Reinigungswagen (1b) den ortsfesten Untergrund (4) mittels eines Aggregats zum Schmutzaufsaugen reinigt und/oder mittels mindestens einer Bürste fegt und/oder mittels mindestens eines Magneten von magnetischem Abfall säubert.

5. Verfahren nach einem der Ansprüche 1 bis 4, **dadurch gekennzeichnet, dass** jeder Formträgerwagen (1) an einen Versorgungswagen (6) ankoppelbar ausgebildet und mit Rollen (3) versehen ist, so dass der Formträgerwagen (1) von dem Versorgungswagen (6) angetrieben auf dem ortsfesten Untergrund (4) rollt, wobei der Formträgerwagen (1) zur Einbringung in die Fertigungsstrecke (2) an einen nicht besetzten Versorgungswagen (6) herangefahren und mit diesem gekoppelt wird, wobei der Formträgerwagen (1) hierbei mit seinen Rollen (3) auf dem ortsfesten Untergrund (4) bewegt wird, wobei der Formträgerwagen (1) zwecks Bewegung entlang der Fertigungsstrecke (2) im gekoppelten Zustand mit dem Versorgungswagen (6) von diesem geführt und bewegt wird, wobei der Formträgerwagen (1) hierbei mit seinen Rollen (3) auf dem ortsfesten Untergrund (4) bewegt wird, und wobei der Formträgerwagen (1) zur Herausnahme aus der Fertigungsstrecke (2) von dem Versorgungswagen (6) abgekoppelt und von der Fertigungsstrecke (2) weg geführt wird, wobei der Formträgerwagen (1) hierbei mit seinen Rollen (3) auf dem ortsfesten Untergrund (4) bewegt wird.

6. Verfahren nach einem der Ansprüche 1 bis 5, **dadurch gekennzeichnet, dass** bei Ausbildung der Fertigungsstrecke (2) als geschlossene, vorzugsweise ovale, Bahn mit geraden und gebogenen Abschnitten der Reinigungswagen (1b) und/oder die Formträgerwagen (1) beim Eintritt von einem geraden in einen gebogenen Abschnitt aus der Fertigungsstrecke (2) ausgeschleust werden.

7. Verfahren nach einem der Ansprüche 1 bis 6, **dadurch gekennzeichnet, dass** bei Ausbildung der Fertigungsstrecke (2) als geschlossene, vorzugsweise ovale, Bahn mit geraden und gebogenen Abschnitten der Reinigungswagen (1b) und/oder die Formträgerwagen (1) beim Eintritt von einem gebogenen in einen geraden Abschnitt in die Fertigungsstrecke (2) eingeschleust werden, wobei vorzugsweise der Reinigungswagen (1b) und/oder ein Formträgerwagen (1) beim Einschleusen in die Fertigungsstrecke (2) zunächst an einen freien Platz zwischen zwei Versorgungswagen (6) an bzw. in die Fertigungsstrecke (2) bewegt wird, wobei dann der in Förderrichtung nachfolgende Versorgungswagen (6) den Reinigungswagen (1b) und/oder den Formträgerwagen (1) auf den zur Aufnahme des Reinigungswagens (1b) und/oder des Formträgerwagens (1) vorgesehenen Versorgungswagen (6) schiebt, wodurch der Reinigungswagen (1b) und/oder der Formträgerwagen (1) synchronisiert in seine Ankoppelposition mit dem ihn aufnehmenden Versorgungswagen (6) gebracht wird.

8. Verfahren nach einem der Ansprüche 1 bis 7, **dadurch gekennzeichnet, dass** das Ankoppeln und das Abkoppeln eines Reinigungswagens (1b) und/oder eines Formträgerwagens (1) an einen und von einem Versorgungswagen (6) durch eine Verschiebebewegung des Reinigungswagens (1b) und/oder des Formträgerwagens (1) erfolgt, die horizontal und senkrecht zur Bewegungsrichtung des Versorgungswagens (6) ist.

9. Verfahren nach einem der Ansprüche 1 bis 8, **dadurch gekennzeichnet, dass** der von einem Versorgungswagen (6a) abgekoppelter Reinigungswagen (1b) und/oder ein von einem Versorgungswagen (6a) abgekoppelter Formträgerwagen (1a) durch einen dem Versorgungswagen (6a) nachfolgenden Versorgungswagen (6) aus der Fertigungsstrecke (2) herausgeschoben wird.

10. Vorrichtung zur Herstellung von Formteilen aus Mehrkomponenten-Reaktivkunststoff, insbesondere aus Polyurethan, umfassend eine Anzahl Werkzeugformen auf Formträgerwagen (1) und eine geschlossene, vorzugsweise ovale, Fertigungsstrecke (2), entlang der die Formträgerwagen (1) bewegt werden können, insbesondere zur Durchführung des Verfahrens nach einem der Ansprüche 1 bis 9,
**gekennzeichnet durch**
mindestens einen Reinigungswagen (1b), der mit Rollen (3) versehen ist und mit diesen auf einem ortsfesten Untergrund (4) bewegt werden kann, wobei der Reinigungswagen (1b) ausgebildet ist, den ortsfesten Untergrund (4) zu reinigen,
wobei entlang der geschlossenen Fertigungsstrecke (2) an einem Förderelement (5) eine Anzahl Versorgungswagen (6) angeordnet ist, die **durch** das Förderelement (5) bewegt werden können, und
wobei der mindestens eine Reinigungswagen (1b) zur lösbaren Ankopplung an einen Versorgungswagen (6) ausgebildet ist.

11. Vorrichtung nach Anspruch 10, **dadurch gekennzeichnet, dass** Verschiebemittel (7, 7') vorhanden sind, mit denen der Reinigungswagen (1b) in eine Richtung horizontal und senkrecht zur Bewegungrichtung des Versorgungswagens (6) bewegt werden kann, um ihn an den Versorgungswagen (6) anzukoppeln oder ihn von diesem zu entkoppeln, wobei der Reinigungswagen (1b) und der Versorgungswagen (6) vorzugsweise mit Kopplungsmitteln (8) versehen sind, mit denen der Reinigungswagen (1b) vom Versorgungswagen (6) mit Signalen und/oder Energie versorgt werden kann.

12. Vorrichtung nach Anspruch 10 oder 11, **dadurch gekennzeichnet, dass** der Reinigungswagen (1b) mindestens ein Führungselement (9) aufweist, das zum Eingriff in eine am ortsfesten Untergrund (4) angeordnete Führungsschiene (10, 10') ausgebildet ist, um den Reinigungswagen (1b) in Richtung der Führungsschiene (10, 10') zu führen.

## Claims

1. Method for the production of form parts from multi-component reactive plastic material, especially from polyurethane, wherein a plurality of moulds is moved by means of mould carriages (1) at least temporarily along a closed, preferably oval, production line (2),
**characterized in**
**that** a plurality of supply carriages (6) is arranged along the closed production line (2) at a conveying element (5), which supply carriages (6) are moved by means of the conveying elements (5),
**that** temporarily instead of at least one mould carriage (1) a cleaning carriage (1b) is arranged in the production line (2) and
**that** the cleaning carriage (1b) is detachably coupled with a supply carriage (6) and is moved by the same,
wherein the cleaning carriage (1b) is equipped with rolls (3) and is moved with the same on a stationary ground (4) and
wherein the stationary ground (4) is cleaned with the cleaning carriage (1b).

2. Method according to claim 1, **characterized in that** for the import into the production line (2) the cleaning carriage (1b) is driven up to a not occupied supply carriage (6) and is coupled with the same, wherein the cleaning carriage (1b) is thereby moved with its rolls (3) on the stationary ground (4), wherein the cleaning carriage (1b) for moving along the production line (2) in the coupled state with the supply carriage (6) is guided and moved by the supply carriage (6), wherein the cleaning carriage (1b) is moved thereby with its rolls (3) on the stationary ground (4) and wherein for the export from the production line (2) the cleaning carriage (1b) is de-coupled from the supply carriage (6) and is driven away from the production line (2), wherein the cleaning carriage (1b) is thereby moved with its rolls (3) on the stationary ground (4).

3. Method according to claim 1 or 2, **characterized in that** the cleaning carriage (1b) is supplied by the supply carriage (6) with signals and/or energy in the state in which the cleaning carriage (1b) is coupled with the supply carriage (6).

4. Method according to one of claims 1 to 3, **characterized in that** the cleaning carriage (1b) cleans the stationary ground (4) by means of an aggregation for soakage of dirt and/or sweeps by means of at least one brush and/or cleans by means of at least one magnet from magnetic waste.

5. Method according to one of claims 1 to 4, **characterized in that** each mould carriage (1) can be coupled with a supply carriage (6) and is equipped with rolls (3) so that the mould carriage (1) is driven by a supply carriage (6) and rolls on the stationary ground (4), wherein the mould carriage (1) is approached to a not occupied supply carriage (6) and is coupled with the same to introduce the mould carriage (1) into the production line (2), wherein here the mould carriage (1) is moved on the stationary ground (4) with its rolls (3), wherein for the movement along the production line (2) the mould carriage (1) is guided and moved by the supply carriage (6) in a coupled state between the mould carriage (1) and the supply carriage (6), wherein here the mould carriage (1) is moved with its rolls (3) on the stationary ground (4) and wherein the mould carriage (1) is decoupled from the supply carriage (6) and is moved away from the production line (2) for taking the mould carriage (1) out of the production line (2), wherein here the mould carriage (1) is moved with its rolls (3) on the stationary ground (4).

6. Method according to one of claims 1 to 5, **characterized in that** in the case in which the production line (2) is designed as closed, preferably oval, path with straight and arcuated sections the cleaning carriage (1b) and/or the mould carriages (1) are exported from the production line (2) at an entry of a straight section into an arcuated section.

7. Method according to one of claims 1 to 6, **characterized in that** in the case in which the production line (2) is designed as closed, preferably oval, path with straight and arcuated sections the cleaning carriage (1b) and/or mould carriages (1) are imported into the production line (2) at an entry from an arcuated into a straight section, wherein preferably the cleaning carriage (1b) and/or a mould carriage (1) is moved for the import into the production line (2) at first to a free space between two supply carriages (6) at or into the production line (2), wherein then the supply carriage (6) which follows in conveying direction pushes the cleaning carriage (1b) and/or mould carriage (1) onto the supply carriage (6) which is intended for the reception of the cleaning carriage (1b) and/or mould carriage (1), whereby the cleaning carriage (1b) and/or the mould carriage (1) is brought synchronically in its coupling position with the supply carriage (6) which receives the cleaning carriage (1b) and/or the mould carriage (1).

8. Method according to one of claims 1 to 7, **characterized in that** the coupling and the decoupling of a cleaning carriage (1b) and/or a mould carriages (1) at a and from a supply carriage (6) takes place by a shift movement of the cleaning carriage (1b) and/or mould carriage (1) which movement is horizontal and perpendicular to the movement direction of the supply carriage (6).

9. Method according to one of claims 1 to 8, **characterized in that** a cleaning carriage (1b) which is decoupled from a supply carriage (6a) and/or a mould carriage (1a) which is decoupled from a supply carriage (6a) is pushed out of the production line (2) by a supply carriage (6) which follows this supply carriage (6a).

10. Device for the production of form parts from multi-component reactive plastic material, especially from polyurethane, comprising a plurality of moulds arranged on mould carriages (1) and a closed, preferably oval, production line (2), along which the mould carriages (1) can be moved, especially for carrying out the method according to one of claims 1 to 9,
**characterized by**
at least one cleaning carriage (1b) which is equipped with rolls (3) and which can be moved with the rolls (3) on a stationary ground (4), wherein the cleaning carriage (1b) is designed to clean the stationary ground (4),
wherein along the closed production line (2) a plurality of supply carriages (6) is arranged at a conveying element (5) which supply carriages (6) can be moved by the conveying element (5) and
wherein the at least one cleaning carriage (1b) is designed to be detachable coupled with the supply carriages (6).

11. Device according to claim 10, **characterized in that** displacement means (7, 7') are arranged by which the cleaning carriage (1b) can be moved horizontally and perpendicular to the movement direction of the supply carriage (6) to couple or decouple the cleaning carriage (1) to the or from the supply carriage (6), wherein preferably the cleaning carriage (1b) and the supply carriage (6) are equipped with coupling means (8) by which the cleaning carriage (1b) can be supplied with signals and/or energy from the supply carriage (6).

12. Device according to claim 10 or 11, **characterized in that** the cleaning carriage (1b) comprise at least one guide element (9) which is designed for engagement into a guide bar (10, 10') which is arranged at the stationary ground (4), to guide the cleaning carriage (1b) in the direction of the guide bar (10, 10').

## Revendications

1. Procédé de fabrication de pièces moulées en plastique réactif à plusieurs composants, en particulier en polyuréthane, dans lequel plusieurs moules d'outils sont déplacés au moyen de chariots de support de moule (1) au moins temporairement le long d'une section de fabrication fermée, de préférence ovale (2),
**caractérisé**
**en ce que** le long de la section de fabrication fermée (2) au niveau d'un élément de transport (5) est disposée une pluralité de chariots d'alimentation (6) qui sont déplacés par l'élément de transport (5),
**en ce que** périodiquement à la place d'au moins un chariot de support de moule (1), un chariot de nettoyage (1b) soit disposé dans la section de fabrication (2), et
**en ce que** le chariot de nettoyage (1b) soit couplé de façon séparable à un chariot d'alimentation (6) et déplacé par celui-ci,
sachant que le chariot de nettoyage (1b) est doté de rouleaux (3) et déplacé avec ceux-ci sur un subjectile fixe (4) et
sachant que le subjectile fixe (4) est nettoyé avec le chariot de nettoyage (1b).

2. Procédé selon la revendication 1, **caractérisé en ce que** le chariot de nettoyage (1b) pour l'introduction dans la section de fabrication (2) est approché d'un chariot d'alimentation non garni (6) et est accouplé à celui-ci, le chariot de nettoyage (1b) étant dans ce cas déplacé avec ses rouleaux (3) sur le subjectile fixe (4), le chariot de nettoyage (1b), en vue de son déplacement le long de la section de fabrication (2), étant guidé et déplacé par le chariot d'alimentation (6) dans l'état accouplé avec celui-ci, le chariot de nettoyage (1b) étant dans ce cas déplacé avec ses rouleaux (3) sur le subjectile fixe (4), et le chariot de nettoyage (1b), en vue de son enlèvement de la section de fabrication (2), étant désaccouplé du chariot d'alimentation (6) et étant guidé à l'écart de la section de fabrication (2), le chariot de nettoyage (1b) étant dans ce cas déplacé avec ses rouleaux (3) sur le subjectile fixe (4).

3. Procédé selon la revendication 1 ou 2, **caractérisé en ce que** le chariot de nettoyage (1b), dans l'état accouplé au chariot d'alimentation (6), reçoit de celui-ci des signaux et/ou de l'énergie.

4. Procédé selon l'une des revendications 1 à 3, **caractérisé en ce que** le chariot de nettoyage (1b) nettoie le subjectile fixe (4) au moyen d'un groupe d'aspiration des saletés et/ou balaie le subjectile fixe (4) au moyen d'au moins une brosse et/ou décrasse le subjectile fixe (4) de déchets magnétiques au moyen d'au moins un aimant.

5. Procédé selon l'une des revendications 1 à 4, **caractérisé en ce que** chaque chariot de support de moule (1) est conçu en pouvant être couplé à un chariot d'alimentation (6) et est doté de rouleaux (3), de sorte que le chariot de support de moule (1) roule sur le subjectile fixe (4) en étant entraîné par le chariot d'alimentation (6), sachant que le chariot de support de moule (1) est approché d'un chariot d'alimentation (6) non occupé et est couplé à celui-ci pour l'amener sur la section de fabrication (2), sachant que le chariot de support de moule (1) est alors déplacé avec ses rouleaux (3) sur le subjectile fixe (4), sachant que le chariot de support de moule (1) est dirigé et déplacé par le chariot d'alimentation (6) dans le but d'être déplacé le long de la section de fabrication (2) dans l'état couplé avec celui-ci, sachant que le chariot de support de moule (1) est alors déplacé avec ses rouleaux (3) sur le subjectile fixe (4), et sachant que le chariot de support de moule (1) est désaccouplé du chariot d'alimentation (6) pour le sortir de la section de fabrication (2) et éloigné de la section de fabrication (2), sachant que le chariot de support de moule (1) est alors déplacé avec ses rouleaux (3) sur le subjectile fixe (4).

6. Procédé selon l'une quelconque des revendications 1 à 5, **caractérisé en ce que**, dans le cas d'une réalisation de la section de fabrication (2) en tant que trajectoire fermée, de préférence ovale, avec des portions droites et des portions courbes, le chariot de nettoyage (1b) et/ou les chariots de support de moule (1), en entrant dans une section courbe à partir d'une section droite, (est) sont évacué(s) hors de la section de fabrication (2).

7. Procédé selon l'une quelconque des revendications 1 à 6, **caractérisé en ce que**, dans le cas d'une réalisation de la section de fabrication (2) en tant que trajectoire fermée, de préférence ovale, avec des portions droites et des portions courbes, le chariot de nettoyage (1b) et/ou les chariots de support de moule (1), en entrant dans une section droite à partir d'une section courbe, (est) sont projeté(s) dans la section de fabrication (2), de préférence le chariot de nettoyage (1b) et/ou un chariot de support de moule (1), lors de sa (leur) projection dans la section de fabrication (2), étant d'abord déplacé(s) au niveau d'un emplacement libre entre deux chariots d'alimentation (6) sur ou dans la section de fabrication (2), le chariot d'alimentation (6) suivant dans la direction de transport poussant alors le chariot de nettoyage (1b) et/ou le chariot de support de moule (1) sur le chariot d'alimentation (6) prévu pour recevoir le chariot de nettoyage (1b) et/ou le chariot de support de moule (1), de sorte que le chariot de nettoyage (1b) et/ou le chariot de support de moule (1) soit (soient) amené(s) de manière synchronisée dans sa (leur) position d'accouplement avec le chariot d'alimentation (6) qui le(s) reçoit.

8. Procédé selon l'une quelconque des revendications 1 à 7, **caractérisé en ce que** l'accouplement d'un chariot de nettoyage (1b) et/ou d'un chariot de support de moule (1) à un chariot d'alimentation (6) et son désaccouplement de celui-ci s'effectuent par un mouvement de déplacement du chariot de nettoyage (1b) et/ou du chariot de support de moule (1) qui est horizontal et perpendiculaire à la direction de déplacement du chariot d'alimentation (6).

9. Procédé selon l'une quelconque des revendications 1 à 8, **caractérisé en ce que** le chariot de nettoyage (1b) désaccouplé d'un chariot d'alimentation (6a) et/ou un chariot de support de moule (1a) désaccouplé d'un chariot d'alimentation (6a) est repoussé hors de la section de fabrication (2) par un chariot d'alimentation (6) suivant ledit chariot d'alimentation (6a).

10. Dispositif de fabrication de pièces moulées en plastique réactif à plusieurs composants, en particulier en polyuréthane, comprenant plusieurs moules d'outils sur des chariots de support de moule (1) et une section de fabrication fermée, de préférence ovale (2), le long de laquelle peuvent être déplacés les chariots de support de moule (1), en particulier pour mettre en oeuvre le procédé selon l'une quelconque des revendications 1 à 9,
**caractérisé par**
au moins un chariot de nettoyage (1b) qui est pourvu de rouleaux (3) et peut être déplacé avec ceux-ci sur un subjectile fixe (4), sachant que le chariot de nettoyage (1b) est conçu pour nettoyer le subjectile fixe (4),
une pluralité de chariots d'alimentation (6) étant disposée le long de la section de fabrication fermée (2) au niveau d'un élément de transport (5), lesquels chariots d'alimentation peuvent être déplacés par l'élément de transport (5), et
l'au moins un chariot de nettoyage (1b) étant réalisé de manière à s'accoupler de manière amovible à un chariot d'alimentation (6).

11. Dispositif selon la revendication 10, **caractérisé en ce que** des moyens de déplacement (7, 7') sont prévus, avec lesquels le chariot de nettoyage (1b) peut être déplacé dans une direction horizontalement et perpendiculaire à la direction de déplacement du chariot d'alimentation (6), afin de l'accoupler au chariot d'alimentation (6) ou de le désaccoupler de celui-ci, le chariot de nettoyage (1b) et le chariot d'alimentation (6) étant pourvus de préférence de moyens d'accouplement (8) avec lesquels le chariot de nettoyage (1b) peut recevoir des signaux et/ou de l'énergie depuis le chariot d'alimentation (6).

12. Dispositif selon la revendication 10 ou 11, **caractérisé en ce que** le chariot de nettoyage (1b) présente au moins un élément de guidage (9) qui est réalisé pour s'engager dans un rail de guidage (10, 10') disposé sur le subjectile fixe (4) afin de guider le chariot de nettoyage (1b) dans la direction du rail de guidage (10, 10').
